# EUROPEAN PATENT APPLICATION

(11) **EP 4 574 682 A1**
(43) Date of publication of application: **25.06.2025**
(21) Application number: 24220831.2
(22) Date of filing: 17.12.2024
(51) Int. Cl.: B64G 1/16, B64G 1/52, B64G 1/66, B64G 4/00

(54) **SYSTEMS, DEVICES, AND METHODS FOR ELECTRODYNAMIC DUST SHIELDING**

(30) Priority: 18.12.2023 US 202363611227 P
(71) Applicant: MacDonald, Dettwiler and Associates Inc., Brampton, ON L6Y 6K7 (CA)
(72) Inventor: Quinlan, Peter William, Brampton, L6Y 6K7 (CA); Shaw, Amy, Brampton, L6Y 6K7 (CA); Basic, Goran Jurisa, Brampton, L6Y 6K7 (CA); Melchior, Ella, Brampton, L6Y 6K7 (CA); Gill, Karamvir, Brampton, L6Y 6K7 (CA)
(74) Representative: Humphrey-Evans, Edward John

(57) **Abstract**

Provided is a system, method and device for electrodynamic dust shielding. The system includes an electrodynamic dust shield device external to an object having lunar dust. The electrodynamic dust shield device electrodynamically removes unwanted material from the object. The method includes positioning an electrodynamic dust shield device near an object to be cleaned from dust, and providing an electric field with the electrodynamic dust shield to remove dust from the object to be cleaned.

## Description

### Technical Field

The following relates generally to dust shielding, and more particularly to systems and methods for electrodynamic dust shielding.

### Introduction

Lunar dust, space dust, or other small dust can adhere to objects surfaces and compromise performance of the object, such as abrasion and degradation from extensive contact. Lunar regolith poses as a hazard to mechanical, optical, and thermal systems in the space environment.

Lunar dust may be composed of tiny sharp fragments of any one or more rock, glass and minerals formed from the local lunar bedrock where the dust originates. The dust fragments range in size from millimeters to nanometers. The dust fragments have very sharp edges. The dust fragments are also able to hold an electrostatic charge. This makes the lunar dust both very adhesive and abrasive, capable of permeating a wide range of electrical, mechanical, and thermal systems and can be very destructive to surface finishes and coatings.

Lunar dust is a product of the repeated impacts of micrometeorites across the lunar surface. The lunar bedrock is shattered by these impacts to create a layer of loose rock known as the regolith which when further broken down produces lunar dust particles. Heat from impact can often melt the rock which may cool into glass and is further shattered by subsequent impacts. The dust is composed of both rock and glass particles, ranging in size from millimeters to nanometers. Any sharp edges formed as fragments are shattered are mostly preserved, as there is no environmental weathering on the lunar surface, such as an atmosphere or hydrosphere, to wear down particle surfaces and edges. This makes the dust very abrasive and destructive to a range of systems that may be operated in a lunar dust environment.

Dust mitigation has been an important factor in robotic operations in a lunar environment. Electrodynamic dust shields may be used to electrically remove the dust from an object. Electrodynamic dust shields have been developed for mechanical systems, optical lenses, and abrasion and wear-resistant fabrics of spacesuits that interact with the lunar environment.

However, conventional electrodynamic dust shields are mounted onto the surface being protected. For example, in conventional systems, the electrodynamic dust shield electrical field lines originate within the material to be cleared. For example, the electrical lines originate inside optical coatings on a surface of a lens. Conventional electrodynamic dust shields have not been extended to an independently manipulated device.

Plasma fills the universe and small charged dust particles are ubiquitous in space plasmas: e.g., interstellar dust (originating from interstellar medium); interplanetary dust (largely originating from comets and asteroids).

In addition to interstellar and interplanetary dust, the plasma environment may be subject to lunar dust (microscopic regolith particles) arising from the lunar surface transported to orbit by lunar surface landers and their return, etc.

The chemical and physical properties of lunar dust may be considerably different to that of interstellar and interplanetary dust. Furthermore, the latter may have an impact on the plasma environment and may adversely affect operation. Depending, on grain sizes and properties, the lunar dust is expected to reside near the surfaces of lunar systems as well as the surrounding space.

Lunar dust particles are generated by the impact of meteorites, micrometeorites, cosmic rays, and solar wind onto the surface of the Moon over billions of years. Based on the bimodal particle size distribution, the nominal range of lunar dust particle size on lunar systems may be, for example from 0.01 microns to 5 microns in size.

Mathematical and numerical models capable of describing and predicting the plasma environment on lunar systems and the distribution and influence of lunar dust should account for the coupling of the dust with the plasma local solar-wind, magnetospheric plasma (dusty plasma).

Dusty plasmas are a complex system in which the plasma particles (ions and electrons), possible neutral particles, as well as dust particles act in a collective way, characterized by two different scales (temporal and spatial): the relatively fast time scales and short wavelengths associated with the plasma ions and electrons and the slow time scales and long wavelengths associated with the dust particles. The understanding and computational tools for the accurate prediction of dusty plasma behavior are not available in conventional systems.

The forces acting on a dust particle include those due to gravitational, electrostatic, magnetic, radiation pressure, as well as ion and neutral particle drag forces, all of which directly impact the transport of the dust grains and provide coupling to the plasma.

Charging of isolated lunar regolith is known to be different than for that of a collection of grains on a surface. Sources of lunar dust particle charging are the interaction with the solar wind plasma, photoelectric emission induced by UV radiation, as well as the triboelectric charging.

Characterization (via observation and measurement) of the locations and size of lunar dust particles in physical space and on the surfaces of lunar systems, along with estimates of the dust grain charge coupled to measurements of plasma properties and electromagnetic fields, may assist with the development and validation of descriptions of the dusty plasma environment on lunar systems.

Operation of spacecraft and stations near solar system bodies brings with it a new space environment consideration, the dust from that object or in its vicinity. This consideration is magnified with the increased interest of scientific and human return missions for nearby bodies of interest such as the Moon and Mars. With each exploration system ascent off of the solar system body, new anthropogenic dust will be introduced into the local orbit which raises concerns regarding the behaviour and impact of space plasmas and the dust from visiting spacecraft on space stations and their systems. Studying, understanding, and increasing knowledge of dust interaction with space weather and with spacecraft surfaces will help to quantify the risks and potentially increase the useful life of space assets in these environments.

Accordingly, there is a need for an improved system and method for electrodynamic dust shielding that overcomes at least some of the disadvantages of existing systems and methods.

### Summary

Provided is a system for electrodynamic dust shielding. The system includes an electrodynamic dust shield device external to an object having dust-contaminated surfaces. The electrodynamic dust shield device electrodynamically removes dust from the object.

The electrodynamic dust shield device may include an electric field generator that generates an electric field to remove the dust from external surfaces of the object.

The system may further include a robotic manipulator for manipulating the electrodynamic dust shield.

The electrodynamic dust shield device may be positioned and operated by a human operator.

The electric field generator may generate an electric field that varies from positive to negative field profiles to move the dust off of the object.

The electrodynamic dust shield device may include a dust storage receptacle / volume / area that stores the dust.

The dust from the dust storage receptacle / volume / area may be collected and analyzed.

The dust removal device may include an electromagnetic manager for managing electromagnetic interference and/or electromagnetic compatibility.

The electrodynamic dust shield device may be an end effector that is picked up and removed by the robotic manipulator.

The electrodynamic dust shield device may be a lunar regolith mitigation instrument.

The electrodynamic dust shield device may be positioned by the robotic manipulator within proximity of the object to impose an electric field on particles of the dust, which causes motion of the particles away from the object.

The electrodynamic dust shield device may perform dust-clearing repeatedly throughout alternate locations on a spacecraft.

The object may be any one or more of a rover, a payload, an orbital replacement unit, a robotics system a rover camera, a robotic mechanical subsystem, an optical lens on a telescope, a heat exchanger radiator surface, a spacecraft thermal blanket, and abrasion and wear-resistant fabrics of a spacesuits shell.

The electrodynamic dust shield device may include a control unit for controlling the electrodynamic dust shield device.

The electrodynamic dust shield device may receive power from the robotic manipulator.

The system may further include a control device executing control software for controlling movement of the robotic manipulator. The robotic manipulator may include a plurality of booms and joints. The control device may control movement of the joints thereby enabling controlled movement of the electrodynamic dust shield device.

The system may further include a camera vision system for providing image data to the control device to position the electrodynamic dust shield device to the object.

The camera vision system and/or control device may identify surfaces which require dust removal.

The system may further include a platform for supporting the robotic manipulator. The platform may be a satellite, a spacecraft bus, or a vehicle platform.

Dust mitigation capabilities of the electrodynamic dust shield may be applied to Mars exploration.

The system for dust shielding may be applied to any one or more of plasma process devices, dusty plasma devices, nuclear systems, and solar arrays.

Provided is a method for electrodynamic dust shielding. The method includes positioning an electrodynamic dust shield device near an object to be cleaned from dust, and providing an electric field with the electrodynamic dust shield to move the dust away from the object to be cleaned.

The method may further include removing some or all of the dust from the object to be cleaned.

The method may further include imaging the object to be cleaned to position of the electrodynamic dust shield relative to object to be cleaned.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figures 1, 2, and 3 illustrate side, perspective and detailed views of a robotic system for electrodynamic dust shielding, in accordance with an embodiment;
Figure 4 illustrates a flow chart of a method for electrodynamic dust shielding, in accordance with an embodiment;
Figure 5A and 5B are sectional and perspective views of an electrodynamic dust shield device, in accordance with an embodiment;
Figure 6 is a perspective view of a robotic system having the electrodynamic dust shield device of Figures 5A and 5B; and
Figure 7 is a block diagram of a electrodynamic dust system, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

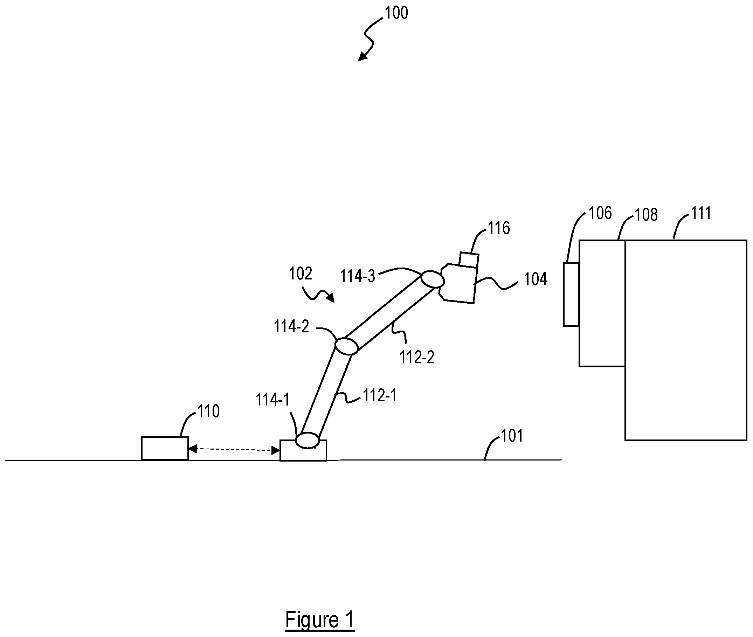

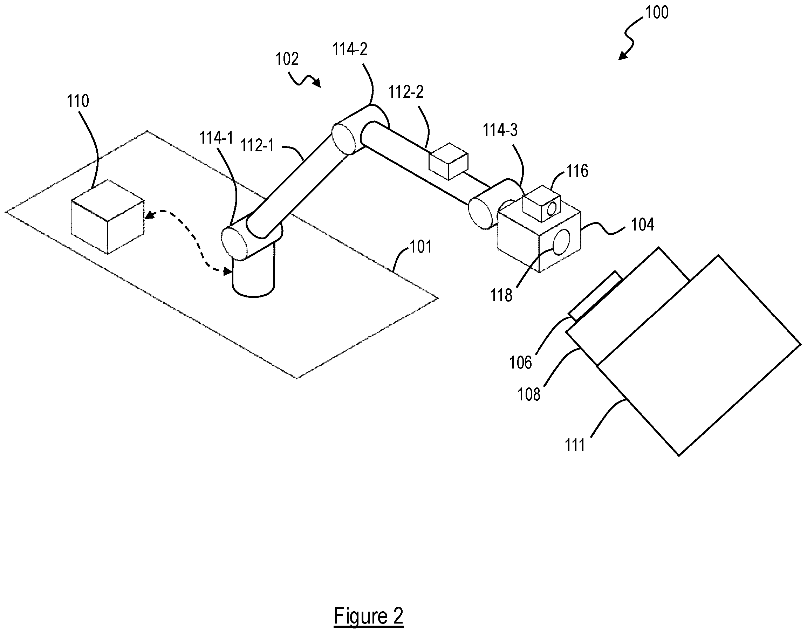

Referring now to Figures 1, 2, and 3 shown therein is a robotic system 100 for electrodynamic dust shielding, according to an exemplary embodiment. The robotic system 100 is coupled to a platform 101. In a space-based application, the platform 101 may be a satellite or spacecraft bus, or vehicle platform (e.g., on a rover or the like).

The robotic system 100 includes a robotic manipulator 102. The robotic system 100 includes an electrodynamic dust shield device 104 coupled to a free end of the robotic manipulator 102. The robotic manipulator 102 manipulates, moves, and positions the electrodynamic dust shield device 104. The electrodynamic dust shield device 104 may be an end effector that can be picked up and removed by the robotic manipulator 102.

In an alternative embodiment, the electrodynamic dust shield device 104 may not be manipulated by a robot but is used as a tool by a human operator. The electrodynamic dust shield device 104 is positioned and operated by a human operator.

The electrodynamic dust shield device 104 electrodynamically removes unwanted material 106 from an object 108. The unwanted material 106 may be dust such as lunar regolith. The unwanted material 106 may have electrical properties that makes the unwanted material electrically charged. Lunar regolith poses as a hazard to mechanical, optical, and thermal systems in the space environment. The electrodynamic dust shield device 104 may provide a simple removal process for a diverse range of surfaces that is sustainable throughout space operations.

The object 108 may be a device to be cleaned by the electrodynamic dust shield device 104. The object 108 is mounted on a body, such as a spacecraft 111. The spacecraft 111 may include the platform 101.

The object 108 may be, for example, a rover, a payload, an orbital replacement unit, a robotics system, a rover camera, a robotic mechanical subsystem, an optical lens on a telescope, a heat exchanger radiator surface, a spacecraft thermal blanket, and a spacesuit shell.

In an embodiment, the robotic system 100 includes a control device 110 executing control software for controlling movement of the robotic manipulator 102. The robotic manipulator 102 includes booms 112-1, 112-2 and joints 114-1, 114-2, and 114-3. Generally, the control device 110 controls movement (e.g., rotation) of the joints 114-1, 114-2, and 114-3, thereby enabling controlled movement of the robotic manipulator 102 and ultimately of the electrodynamic dust shield device 104. The manipulator 102 and control device 110 are communicatively connected and the connection is represented as a hashed line between the manipulator 102 and control device 110.

The electrodynamic dust shield device 104 includes a power system for providing power to the electrodynamic dust shield device 104.

The electrodynamic dust shield device 104 includes a position system for positioning the electrodynamic dust shield device 104 with respect to the surface to be cleaned.

The electrodynamic dust shield device 104 includes a trajectory control system.

The electrodynamic dust shield device 104 can advantageously be managed by a robotic system (e.g., 102). The electrodynamic dust shield device 104 may be managed by a cameras for positioning.

The electrodynamic dust shield device 104 may be manipulated and managed manually (e.g., by an astronaut). In a manual system, the manual system may include standoffs used to help in manual positioning without an imaging system. The standoffs may be made from electro-dissipative materials. For example, there may be contact between the electrodynamic dust shield device 104 and a structure that is connected to the object to be cleaned. In a particular example, an astronaut slides the electrodynamic dust shield device 104 using a camera baffle as a guide in order to clean the lens surface without scratching the camera lens.

The robotic system 100 may include a camera vision system 116 for imaging an environment that the robotic system 100 is in. The camera vision system 116 provides image data to the control device 110 that allows the electrodynamic dust shield device 104 to be positioned in the environment.

The electrodynamic dust shield device 104 includes a control unit for controlling the electrodynamic dust shield device 104. The electrodynamic dust shield device 104 receives power from the robotic manipulator 102. The electrodynamic dust shield device 104 receives instructions from the control device 110.

The camera vision system 116 and/or control device 110 can identify the surfaces 108 which require the most dust 106 removal, ensuring the longevity of the impacted systems throughout the operation of the spacecraft 111.

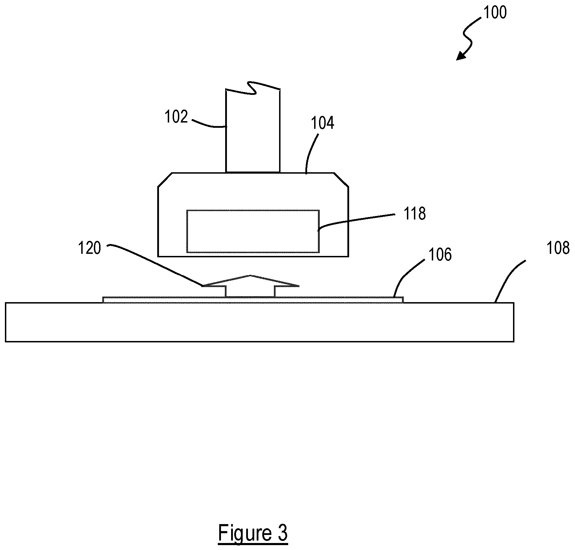

The electrodynamic dust shield device 104 includes an electric field generator 118. The electric field generator 118 generates an electric field to remove (e.g., in direction 120 of Figure 3) dust 106 from external surfaces of the object 108. The electric field generator 118 generates an electric field that varies from positive to negative field profiles to move dust particles off of the object 108. The varying electrodynamic field creates a sequence of forces that cause a dust particle to "walk" away.

The electrodynamic dust shield device 104 serves as a lunar regolith mitigation instrument. The electrodynamic dust shield device 104 emits electrical field lines that originate outside of the object 108 to be cleared.

The electrodynamic dust shield device 104 is positioned by the robotic manipulator 102 within proximity of the dust-loaded surface 108 to impose the electric field on the particles 106, which causes motion of the particles 106 away from the surface 108. The electrodynamic dust shield device 104 may perform dust-clearing repeatedly throughout alternate locations on a spacecraft 111.

The electrodynamic dust shield 104 is positioned on an independent surface. The electrodynamic dust shield 104 is brought into close proximity of the object 108 and unwanted material 106 by the robotic manipulator 102 to impose the electrical field.

Advantageously, the electrodynamic dust shield device 104 may reduce the amount of dust collected in local minima on the object 108.

The electrodynamic dust shield device 104 applied to a secondary surface is novel in its external influence on the desired surface. Conventional electrodynamic dust shield systems include electrodes directly integrated into a surface to generate an electric field for dust removal that push the dust away from the surface.

The electrodynamic dust shield 104 may allow for repeated removal of lunar dust from a diverse range of surfaces. Advantageously, the electrodynamic dust shield 104 eliminates the requirement for electrical dust shield to be built within every surface individually. The electrodynamic dust shield 104 may also provide new insights on the properties and behavior of dust on the spacecraft 111.

The electrodynamic dust shield 104 may be compliant with external robotic operations, and therefore create the first possible environment for the electrodynamic dust shield 104 to be established.

The dust mitigation capabilities of the electrodynamic dust shield 104 may be applied to Mars exploration. Space systems may encounter similar problems with Mars regolith, such as abrasion and degradation from extensive contact. The electrodynamic dust shield 104 may gather mitigation information that can be utilized by the science community to apply to Martian exploration. The mitigation information may be important for future activity, as the mitigation information may have a variety of applications and reduces hazard in an unknown environment. The electrodynamic dust shield 104 may clean a space-based asset (e.g., returning lander, orbiter, station) such as an ascent vehicle from Mars that needs regolith mitigation measures to protect hardware of the asset.

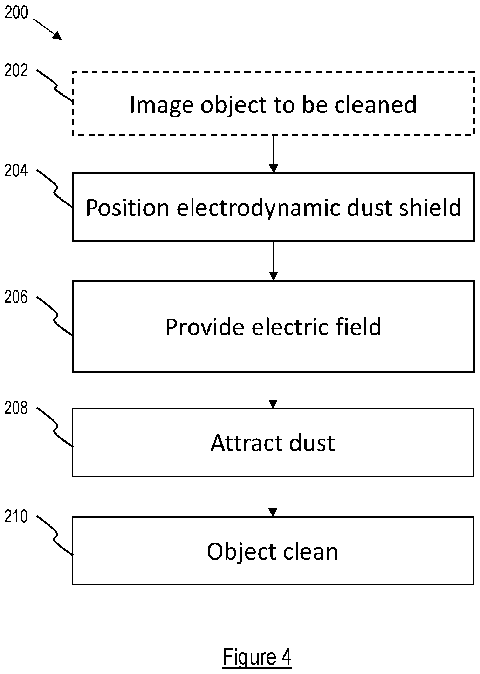

Referring now to Figure 4, provided is a method 200 for electrodynamic dust shielding, in accordance with an embodiment. The method 200 may include removing dust from a surface of an object. The method 200 may be performed by a robotic system and/or a human operator.

At 202, optionally the object to be cleaned is imaged by a camera to help to understand the position of the object.

At 204, an electrodynamic dust shield (EDS) device is positioned near the surface of the object to be cleaned from dust or other unwanted material.

At 206, an electric field is provided by the electrodynamic dust shield. The electrodynamic dust shield generates an electric field that varies from positive to negative field profiles to move dust particles. At 208, the dust is removed from the object.

At 210, the object is to have some or all of the dust removed.

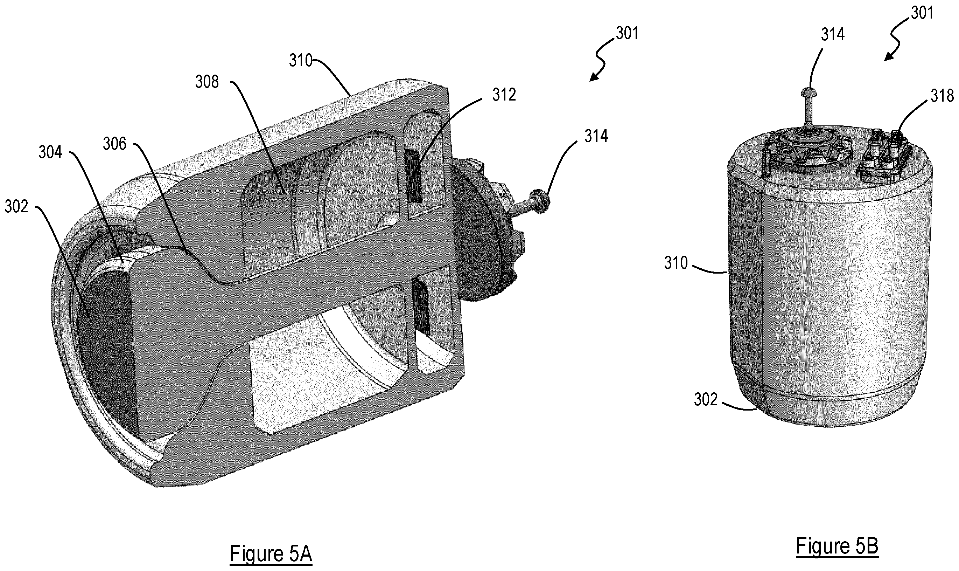

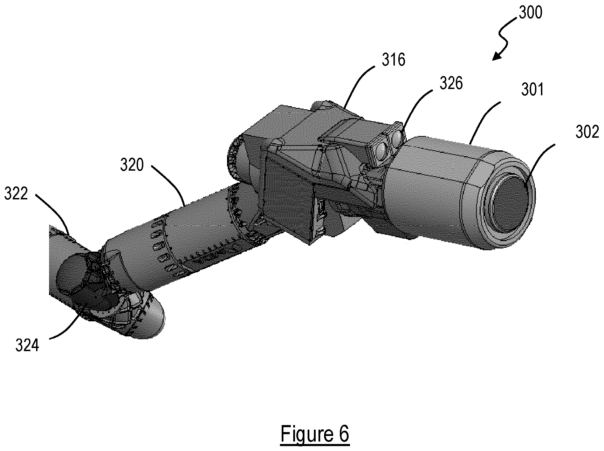

Referring now to Figures 5A, 5B, and 6, shown therein is a robotic system 300 having an electrodynamic dust shield device 301 for electrodynamic dust shielding, according to an embodiment. The electrodynamic dust shield device 300 may be the electrodynamic dust shield device 104 of Figures 1 to 3.

The electrodynamic dust shield device 300 includes a first dust manipulation active surface 302 that generates an electric field. The electrodynamic dust shield device 300 includes a second dust manipulation active surface 304 that generates the electric field. The electrodynamic dust shield device 300 includes a third dust manipulation active surface 306 that generates the electric field.

The electrodynamic dust shield device 300 includes a dust storage receptacle / volume / area 308 that stores dust. The electrodynamic dust shield device 300 includes a housing 310 that encloses the dust storage area 308. The housing 310 may have a cylindrical shaped body.

The dust manipulation active surfaces 302, 304, 306 include an integrated EDS system. The first dust manipulation active surface 302 may come in contact or near contact (e.g., to within a mm) with the surface from which to remove dust. The surfaces indicated also include the sides of the channel that connects the contact surface with the dust storage area 308. This channel guides lunar dust to the interior dust storage area 308 of the electrodynamic dust shield device 301.

The electrodynamic dust shield device 301 uses controlled electro-static high voltage pulses between the dust manipulation active surfaces 302, 304, 306 to control and guide the dust particles in the dust storage area 308.

The electrodynamic dust shield device 300 includes an avionics card 312 to create the electrical field for the first, second and third dust manipulation surfaces 302, 304, 306. This may have the benefit of collecting the dust such that if necessary it can be studied at a later date. This may have the benefit of inhibiting pushed off dust from simply floating away and attaching itself to some other part of a station.

The electrodynamic dust shield device 300 includes a grapple fixture 314 for attaching to a robotic arm 316. The grapple fixture 314 will allow the electrodynamic dust shield device 301 to be powered and manipulated by the robotic arm 316.

The electrodynamic dust shield device 300 includes an electrical connection 316 that connects the avionics card 312 to an electrical connection on the robotic arm 316.

The robotic arm 316 includes a first arm 320 and a second arm 322 that are pivotably connected at a joint 324. The robotic arm 316 may include a vision system 326 (e.g., camera) for monitoring dust. The vision system 326 may view the area to be removed of dust.

The system 300 may combine sample acquisition with the sample storage 308. The system 300 may include a three dimensional (3D) electro-static laminar surface valve for manipulation and mitigation of charged dust particles. The system 300 may use controlled electro-static high-voltage pulses at a specific frequency and over enclosing multiple surfaces implemented with flex-circuit traces to allow to contain and guide the charged particles into specific dust storages areas 308 for storage and mitigation.

Dust particles, when disturbed in a microgravity environment, can create clouds of dust that are difficult to contain. They system 300 may include an arrangement and synchronizing of electrical pulses over multiple surfaces laid out in a 3D arrangement. The system 300 may have a spacing that enables precise particle manipulation as a volumetric laminar flow between the surfaces 302, 304, 306 of the electrodynamic dust shield device 301. The 3D arrangement and layout of a flex-circuit grid may provide a further improvement and capabilities of electrodynamic dust manipulation and enable contactless containment and storage of particle dust clouds in microgravity environment.

In microgravity, lunar dust or similar particles may not be bound to a particular surface and a 3D manipulation of the dust or similar particles may enable efficient management of dust within sampling and collection instruments.

The electrodynamic dust shield device 301 may guide manipulating and coagulating dust particles within instrument cavities for collection, sampling and storage of lunar dust or similar charged particles.

The electrodynamic dust shield device 301 may advantageously provide analysis of lunar dust leading to an enhanced scientific understanding of dusty plasmas in the lunar vicinity and in deep space. The electrodynamic dust shield device 301 may advantageously demonstrate technologies for future sample acquisition. The electrodynamic dust shield device 301 may be applied to terrestrial applications, for example, for cleaning of solar arrays and/or solar farms and plasma processing of semiconductor material. With the expansion of the Earth to Moon economy, lunar dust characterization and mitigation will be a key category of technologies for both scientific and commercial lunar activities on and around the Moon.

During manipulation, the electrodynamic dust shield device 301 is picked up by the robotic arm 316 via the grapple fixture 314. The electrodynamic dust shield 301 is positioned with the tip of the electrodynamic dust shield 301 pointed towards the lunar system surface above the area of interest for measurement or dust acquisition and removal. The tip of the electrodynamic dust shield 301 may come within 1 mm of the lunar system surface.

As the robotic arm 316 maneuvers the electrodynamic dust shield device 301 around the lunar system and over the area of interest, the vision system 326 is used for space situational awareness (SSA), in addition to observing the dust, to observe the surrounding area for obstructions and hazards. The vision system 326 may provide more information about the worksite and its surroundings.

Prior to operating the electrodynamic dust shield device 301, the identified areas of interest may be assessed to ensure the surface material and nearby systems are not susceptible to EMI/EMC or can be properly protected prior to its use. This may be of particular importance over the course of the mission as more anthropogenic events occur and the environment is better understood potentially resulting in the areas of interest changing.

During static operation, the electrodynamic dust shield device 301 is placed at a payload mounting location external on the lunar system. Strategic positioning of the electrodynamic dust shield device 301 at lunar system utilization sites in close proximity to a docking area may increase the scientific dust analysis capability. While in this position the electrodynamic dust shield 301 may collect dust that settles onto its surface and to image areas of lunar system within the line of sight of the electrodynamic dust shield 301.

The electrodynamic dust shield device 301 may provide dust removal by utilizing electrostatic and electrodynamic behavior of dust to remove it off of surfaces. The electrodynamic dust shield 301 has electrodes at its tip to attract the dust and move it into the dust storage area 308.

The electrodynamic dust shield device 301 may provide dust analysis. This is executed via the vision system 326. The vision system 326 may observe dust coverage after major dust source events.

The electrodynamic dust shield device 301 may acquire dust samples. Lunar dust samples may not need to be returned as part of the investigation. The electrodynamic dust shield device 301 has multiple electrodes that work in unison to pass the dust through the chamber and into the dust storage area / volume / container 308 where the dust is secured. The dust from the dust storage area 308 may be collected and analyzed.

The electrodynamic dust shield device 301 may be an actively robotically manipulated payload, which gives it access to the surfaces of the lunar system that would not otherwise be possible.

The electrodynamic dust shield device 301 may lead to insights in lunar dust behavior. The electrodynamic dust shield 301 may ensure safe and efficient operations of lunar exploration systems by performing lunar dust removal.

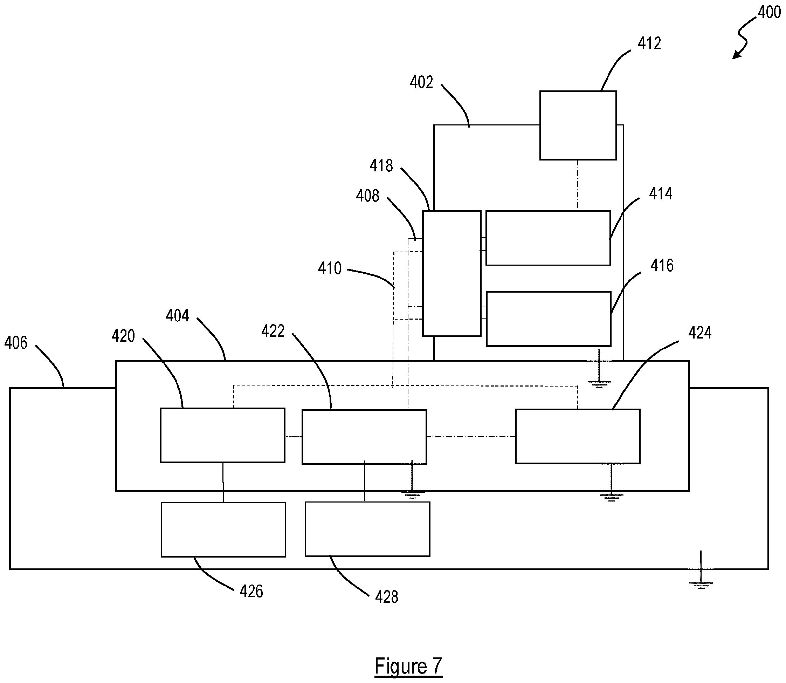

Referring now to Figure 7, shown therein is a block diagram of an electrodynamic dust system 400, in accordance with an embodiment.

The electrodynamic dust system 400 includes a dust removal device 402 for removing dust.

The electrodynamic dust system 400 includes a dust removal device chassis 404 for supporting the dust removal device 402.

The electrodynamic dust system 400 includes a grapple interface 406 that holds the dust removal device chassis 404.

The electrodynamic dust system 400 includes transfer of electrical power 408 from the grapple interface 406 through the dust removal device chassis 404 and to the dust removal device 402.

The electrodynamic dust system 400 includes transfer of data 410 from the grapple interface 406 through the dust removal device chassis 404 and to the dust removal device 402.

The dust removal device 402 includes electrodes 412 for generating an electrodynamic field.

The dust removal device 402 includes electronics 414 that provide electrical power 408 to the electrodes 412. The electronics 414 may generate and manipulate electric fields. The electronics 414 may generate a static or variable field to remove dust.

The dust removal device 402 includes an electromagnetic manager 416 for managing electromagnetic interference (EMI) and/or electromagnetic compatibility (EMC). The dust removal device 402may generate high voltages to move dust. The electronics on the dust removal device 402, as well as neighboring electronics on hardware that the dust removal device 403 is interacting with, may be subject to elevated EMI.

The dust removal device 402 includes a controller 418 for controlling the electrical power 408 and the electrodynamic field. The controller 418 may serve as an EtherCAT control and automation interface for the dust removal device 402. The controller 418 may be subject to a microcontroller unit (MCU) for control operations.

The dust removal device chassis 404 includes a data interface 420 that provides data 410 to the dust removal device 402. The data interface 420 may include an ethernet connection. The data interface 420 may provide data communication to EtherCAT on the dust removal device 402. The data interface 420 may serve as the primary EtherCAT compatible electronic controller for the dust removal device 402.

The dust removal device chassis 404 includes a power control interface 422 that provides power 408 to the dust removal device 402. The power control interface 422 may include a voltage regulator. The power control interface 422 provides power to the system 400.

The dust removal device chassis 404 includes a thermal manager 424 for managing heat in the system 400. The thermal manager 424 may control of electronics and other system 400 components that dissipate and/or generate heat.

The grapple interface 406 includes a controller 426 for commanding and providing data from a central control system.

The grapple interface 406 includes a power supply 428 from a power source.

The system 400 includes a plurality of grounding interfaces for grounding the system 400.

The system 400 may use the magnetic properties of lunar dust as a way to enhance the abilities regarding dust sample acquisition. The magnetic portion of lunar soils may be concentrated in both ilmenite and nanophase iron-bearing particles. The presence of nanophase iron may make a large fraction of a fine-grained sample magnetic; which may be due to agglomeration of particles in a fine-grained mixture. Leveraging the magnetic properties of lunar dust, in an embodiment the system 400 includes a magnet placed on the exterior or interior of the dust removal device 402 to help attract the lunar dust as well as to prevent any undesired dust movement.

The system 400 may provide the ability to clean dust off a station or spacecraft. The system 400 may be of interest to deep space craft, stations, and surface vehicles. The designs of deep space craft, stations, and surface vehicles may be less robust to dust where cleaning is enabled and more targeted to mission objectives. The system 400 may also enable the deployment of technology that is inherently dust sensitive into dusty environments to further expand the available design options for deep space exploration.

The system 400 may provide an advancement of charged particle manipulation via electric fields in a micro-gravity environment and may improve the design of particle accelerators and charge particle capture systems here on earth.

The system 400 may advance knowledge of thermo-vacuum chamber dust testing. The system 400 may advance techniques to prep, charge, deposit, and measure regolith simulant. The representative fidelity of simulant designs and manufacturing would benefit from the system 400 acquired science and technology understanding. The improved understanding of dust properties may benefit the dust resistance capability of future designs for space stations, crafts, landers, and surface vehicles.

The system 400 may have terrestrial applications. The system 400 may provide dust shielding of any one or more of plasma process devices, dusty plasma devices, nuclear systems, and solar arrays.

The system 400 may be applied to dust contamination in plasma processing devices. The presence of dust is of critical concern to the microelectronic industry since particle contamination of semiconductor materials was estimated to account for more than 50% of device failures.

The system 400 may be applied to applications of dusty plasmas. For example, nanocrystalline silicon particles grown in silane plasmas increase both the lifetime and efficiency of silicon solar cells, thin film coating applied in PECVD (plasma enhanced chemical vapor deposition) systems have been applied to materials to improve surface properties, carbon-based nanostructures grown in hydrocarbon plasmas (methan or acetylene) or fluorocarbons are used to produce amorphous thin carbon films and yield materials having extraordinary properties such as high hardness, chemical inertness, and wear resistance, and nanocrystalline diamond films are routinely fabricated in Ar/CH4 plasmas.

The system 400 may be applied to applications in the nuclear industry, an industry that prefers robotic cleaning solutions. The system 400 may be applied to aerosolized contamination. The system 400 may be applied to post-accident cleanup in mining, biohazard, and nuclear accidents.

The system 400 may be applied to cleaning of solar arrays in solar farms in arid areas of Earth. The accumulation of dust on solar panels may reduce the output of photovoltaic panels by as much as 30 percent in a month. The system 400 may be a water-less way to clean solar panels and mirrors.

While the above description provides examples of one or more apparatus, methods, or systems, it will be appreciated that other apparatus, methods, or systems may be within the scope of the claims as interpreted by one of skill in the art.

## Claims

1. A system (100) for electrodynamic dust shielding, the system comprising:
an electrodynamic dust shield device (104, 301, 300, 400, 402) external to an object (108) having dust, wherein the electrodynamic dust shield device electrodynamically removes dust from the object.

2. The system of claim 1, wherein the electrodynamic dust shield device includes an electric field generator (118) that generates an electric field to remove the dust from external surfaces of the object (108).

3. The system of claim 2, wherein the electric field generator (118) generates an electric field that varies from positive to negative field profiles to move the dust (106) off of the object.

4. The system of claim 1, wherein the electrodynamic dust shield device (300, 301) includes a dust storage receptacle (308) that stores the dust.

5. The system of claim 1, wherein the dust removal device (402) includes an electromagnetic manager (416) for managing electromagnetic interference (EMI) and/or electromagnetic compatibility (EMC).

6. The system of claim 1 further comprising:
a robotic manipulator (102) for manipulating the electrodynamic dust shield device; and / or
wherein the electrodynamic dust shield device (104) is an end effector that is picked up and moved by the robotic manipulator (102); and / or
wherein the electrodynamic dust shield device is positioned by the robotic manipulator (102) within proximity of the object (108) to impose an electric field on particles of the dust, which causes motion of the particles away from the object.

7. The system of claim 6 further comprising a platform (101) for supporting the robotic manipulator (102), and wherein the platform is a satellite (111), a spacecraft bus, or a vehicle platform.

8. The system of claim 6 further comprising a control device (110) executing control software for controlling movement of the robotic manipulator (102);
wherein the robotic manipulator includes a plurality of booms (112-1, 112-2) and joints (114-1 - 114-3);
wherein the control device (110) controls movement of the joints thereby enabling controlled movement of the electrodynamic dust shield device (104).

9. The system of claim 8 further comprising a camera vision system (116) for providing image data to the control device (110) to position the electrodynamic dust shield device to the object (108), and/or
wherein the camera vision system and/or control device identifies surfaces which require dust removal.

10. The system of claim 1, wherein the electrodynamic dust shield device is positioned and operated by a human operator.

11. The system of claim 1, wherein the object (108) is any one or more of a rover, a payload, an orbital replacement unit, a robotics system a rover camera, a robotic mechanical subsystem, an optical lens on a telescope, a heat exchanger radiator surface, a spacecraft thermal blanket, and abrasion and wear-resistant fabrics of a spacesuit shell; and / or
wherein dust mitigation capabilities of the electrodynamic dust shield is applied to Mars exploration.

12. The system of claim 1 for dust shielding of any one or more of plasma process devices, dusty plasma devices, nuclear systems, and solar arrays.

13. A method for electrodynamic dust shielding, the method comprising:
positioning (204) an electrodynamic dust shield device near an object to be cleaned from dust; and
providing an electric field (206) with the electrodynamic dust shield to move the dust away from the object to be cleaned.

14. The method of claim 13 further comprising removing (208) some or all of the dust from the object to be cleaned.

15. The method of claim 13 further comprising imaging the object to be cleaned (210) to position of the electrodynamic dust shield device relative to object to be cleaned.
